# EUROPEAN PATENT APPLICATION

(11) **EP 1 211 834 A2**
(43) Date of publication of application: **05.06.2002**
(21) Application number: 01402922.7
(22) Date of filing: 14.11.2001
(51) Int. Cl.: H04J 3/16, H04J 3/08, H04J 3/06, H04Q 11/04

(54) **Improved interface system for synchronous hierarchy telecommunications networks**

(30) Priority: 30.11.2000 IT TO001117
(71) Applicant: ALCATEL, 75008 Paris (FR)
(72) Inventor: Traverso, Giovanni, 23807 Rovagnate (Lecco) (IT); Pais, Golin Orsola, 32041 Auronzo di Cadore (Belluno) (IT); Razzetti, Luca, 20099 Sesto S. Giovanni (Milano) (IT); Bianchi, Lucia, 20133 Milano (IT); Maggio, Santo, 20064 Gongonzola (Milano) (IT)
(74) Representative: Colombo, Stefano Paolo

(57) **Abstract**

Improved interface system for synchronous hierarchy telecommunication networks, in particular SDH networks, comprising a high frequency backpanel function, said system comprising at least a central board (CM, CB1, CB2) and one or more input/output peripheral board (PD) apt to exchange data frames (TRM1, TRM2, TRU1, TRU2) and control bytes (A1, A2, SY, H4, L). According to the invention, the data frames (TRM1, TRM2, TRU1, TRU2) contain control bytes (A1, A2, SY, H4, L) and said data frames (TRM1, TRM2, TRU1, TRU2) are bitwise converted before being exchanged between the peripheral boards (PD) and the central board (CM, CB1, CB2).

## Description

The present invention relates to an improved interface system for synchronous hierarchy telecommunication networks, in particular SDH/SONET networks, comprising a high frequency backpanel function, said system comprising at least a central board and one or more input/output peripheral boards for exchanging data frames and control bytes.

Synchronous hierarchy telecommunication networks, in particular SDH (Synchronous Digital Hierarchy) or SONET (Synchronous Optical Network) networks, require, for interfacing input/output peripheral boards to nodes, such as ADMs, a so-called "backpanel" interface putting the input/output peripheral board in communication with the central board of the switching matrix, also commonly called "switch".

According to prior art, this is implemented by obtaining passive component backpanel interfaces on the switch matrix, which receive from the input/output peripheral board N wires related to the information or payload, as well as further n wires related to signalings.

This arrangement results in a few drawbacks, since in the presence of such a high number of wires the backpanel interface has to be physically obtained by means of a high number of layers, causing design and integration problems.

Moreover, information inputting the switch matrix has to be demultiplexed and the information outputting from said switch matrix should be multiplexed. This results in a high computing load for the switch matrix itself, with a consequent high power consumption and considerable complexity of the processing software.

The object of the present invention is to solve the above drawbacks and provide an improved interfacing system for synchronous hierarchy telecommunication networks, which is more efficient with respect to known solutions.

In this frame, it is the main object of the present invention to provide an improved interfacing system for synchronous hierarchy telecommunication networks, which substantially reduces the number of connections between the input/output peripheral boards and the switch matrixes.

A further object of the present invention is to provide an improved interfacing system for synchronous hierarchy telecommunication networks, which reduces the computational load and power consumption of the switch matrix.

In order to achieve such objects, the present invention provides an improved interfacing system for synchronous hierarchy telecommunication networks, incorporating the features of the annexed claims, which form an integral part of the description herein.

Further objects, features and advantages of the present invention will become apparent from the following detailed description and annexed drawings, which are supplied by way of non limiting example, wherein:
- Fig. 1 shows a basic block diagram of an improved interfacing system for synchronous hierarchy telecommunication networks, according to the present invention;
- Fig. 2 shows a detailed diagram of a first part of the improved interfacing system for synchronous hierarchy telecommunication networks, according to the present invention; and
- Fig. 3 shows a detailed diagram of a second part of the improved interfacing system for synchronous hierarchy telecommunication networks, according to the present invention.

The improved interface for telecommunication networks according to the present invention uses a plurality of solutions, the purpose of which is to reduce the circuits complexity on the switch matrix board, shifting said complexity to the protocol and input-output interfaces.

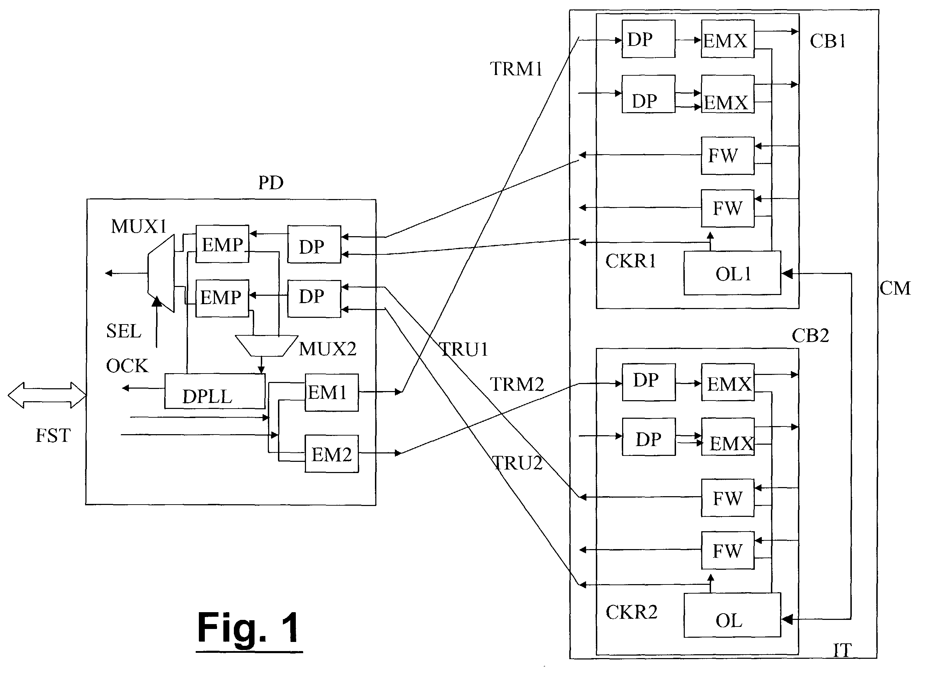

Fig. 1 shows a basic diagram of the improved interfacing system for synchronous hierarchy telecommunication networks according to the present invention, which comprises a switch matrix CM with two central boards CB1 and CB2 operating according to the 1+1 protection principle. Moreover, it shows one among several peripheral boards PD, in particular an input-output peripheral board connected to the switch matrix CM, whose central boards CB1 and CB2 operate as 'master', while the various peripheral boards PD operate as 'slaves'. Therefore, the central boards CB1 and CB2 distribute both the clock signal and synchronism, whereas the peripheral boards PD receive both the clock signal and data from the master boards, and will transmit the data to the master boards themselves.

Fig. 1, in fact, illustrates an input and output data flow FST, such as a STM4 flow at 622,08 Mb/s, of a peripheral board PD; as mentioned above, the peripheral board PD operates as an input/output interface for the switch matrix CM obtained by means of two central boards CB1 and CB2, substantially identical, which implement a so-called protection function 1+1 to overcome a sudden fault of one of the two central boards CB1 and CB2, switching the traffic to the surviving board.

At flow input FST, the peripheral board PD has two elastic memories EM1 and EM2, in order to compensate possible offsets or latencies. The elastic memories EM1 and EM2 will output respective data frames TRM1 and TRM2 to the central boards CB1 and CB2.

Each central board CB1 or CB2 comprises an input phase aligner DP, followed by an elastic memory EMX. This elastic memory EMX is appropriately used to compensate tolerances and various connection delays of the connection between the master central boards CB1 and CB2 and the peripheral board PD. Downstream the elastic memory EMX there is a standard switch matrix, such as an ADM node, not shown here for simplicity's sake.

Thereafter, each central board CB1 is apt to transmit output frames TRU1 and TRU2 from the switch matrix CM by means of blocks inserting frame alignment words FW.

Each central board CB1 or CB2 also comprises a reference clock, OL1 and OL2 respectively, which operates at 622,08 MHz and supplies a reference clock signal, CKR1 and CKR2 respectively, to the elastic memories EMX, to the insertion blocks of the frame alignment words FW as well as to the peripheral board PD, in particular to the phase aligning devices DP contained in said peripheral board PD, which receive the output frames TRU1 and TRU2.

The phase aligners DP of the peripheral board PD are followed downstream by respective elastic memories EMP, whose outputs are sent to a multiplexer MUX1, which will selects the output data from the central board CB1 or CB2 based on a selection signal SEL, according to a 'hitless' protection system, i.e. without traffic interruption, as better shown in the following, whereas a multiplexer MUX2 is provided for selecting the clock signal CKR1 or CKR2 and supplying a system clock signal OCK through an appropriate phase locking loop DPLL.

Finally, it should be noticed how, in order to implement the above "hitless" protection, the local clocks OL1 and OL2 of the relevant central boards CB1 and CB2 exchange time information IT, the contents of which will be further illustrated, but whose function is to make all clock signals CKR1 and CKR2 interdependent.

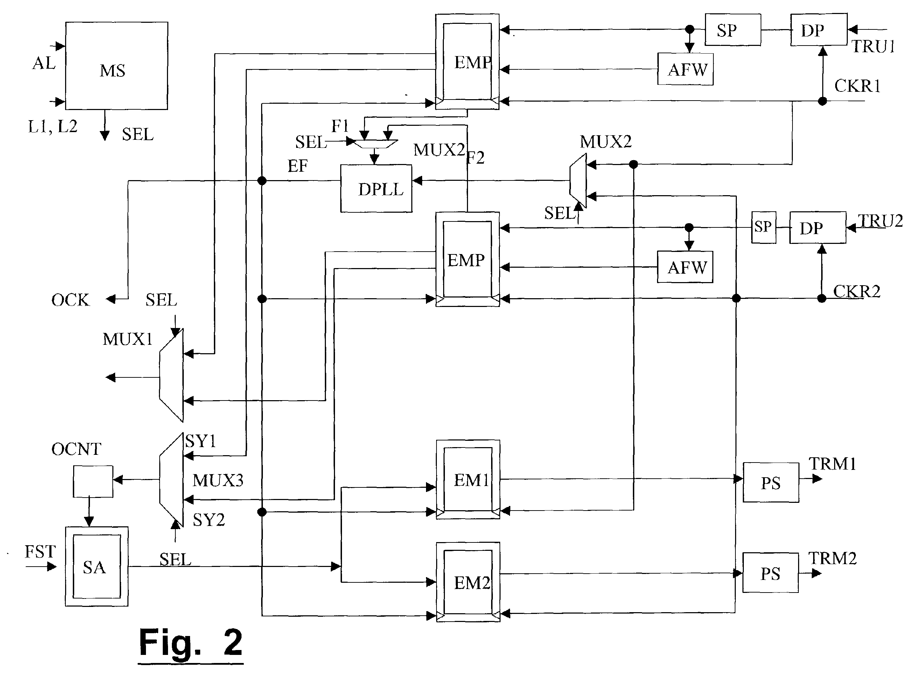

Fig. 2 shows more in detail the block diagram of the peripheral input/output board PD.

The peripheral board PD comprises an input memory block MSA usually performing a standard Section Adaptation function, but in this case it is used to supply the initial frame alignment as soon as the switch matrix-peripheral boards system starts operating and to absorb the phase shifts that may be originated thereafter in the position of the frame alignment word, due to jitter or wander phenomena. The elastic memories EM1 and EM2, consisting e.g. of 36 bytes deep buffers, are located for transmission downstream the memory block MSA. Downstream the elastic memories EM1 and EM2, respective parallel-serial converter devices PS perform parallel to serial conversion of the input frame bytes, i.e. performing bitwise interleaving of the frames TRM1 and TRM2. In order to receive the data contained in the output frames TRU1, TRU2, the peripheral board PD, on the contrary, shows a circuital assembly comprising a phase aligner DP, a serial-parallel converter device SP performing serial to parallel bit conversion, a frame aligner circuit AFW, with the elastic memories EMP located downstream thereof.

The elastic memories EMP are driven by their respective clock signal CKR1 or CKR2 and by a synchronization signal issued by the frame aligner circuit AFW. Each elastic memory EMP sends information about the read phase F1 or F2 to a multiplexer MUX2, which outputs a phase error EF to a digital phase locking loop DPLL. This digital phase locking loop DPLL receives the output of the multiplexer MUX2 as its input reference, namely the clock signal CKR1 or CKR2 as selected through a selection signal SEL, which defines which one of the central boards CB1 and CB2 is activated, the generation of which will be further described.

The digital phase locked loop DPLL outputs a system clock signal OCK, i.e. the clock signal of the ASIC circuit comprising the switch matrix and associated to the output flow FST, which is locked to the clock signal CKR1 or CKR2 that is active at that time and corrected for possible phase errors between the frames TRU1 and TRU2.

After going through the elastic memories EMP, a selection is performed between the frames TRU1 and TRU2 by the multiplexer MUX1, driven by the selection signal SEL, which outputs the data signal for the flow FST.

The memories EMP further supply a synchronism signal SY, SY1 and SY2 respectively, to a multiplexer MUX3, which is also controlled by the selection signal SEL. Therefore, the output of the multiplexer MUXC3 controls an offset counter OCNT, which will measure a possible frame misalignment and perform realignment of the frames TRM1, TRM2 through the memory block MSA.

Finally, in Fig. 2 a logic state machine MS is shown, which assesses the value to be given to the selection signal SEL generated thereby. Operation of the machine will be further described.

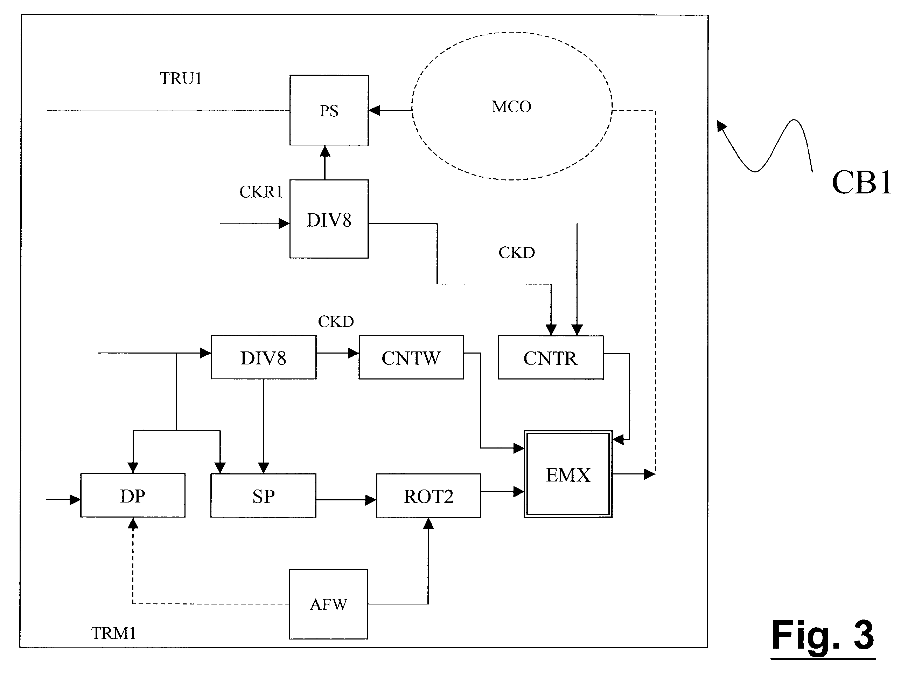

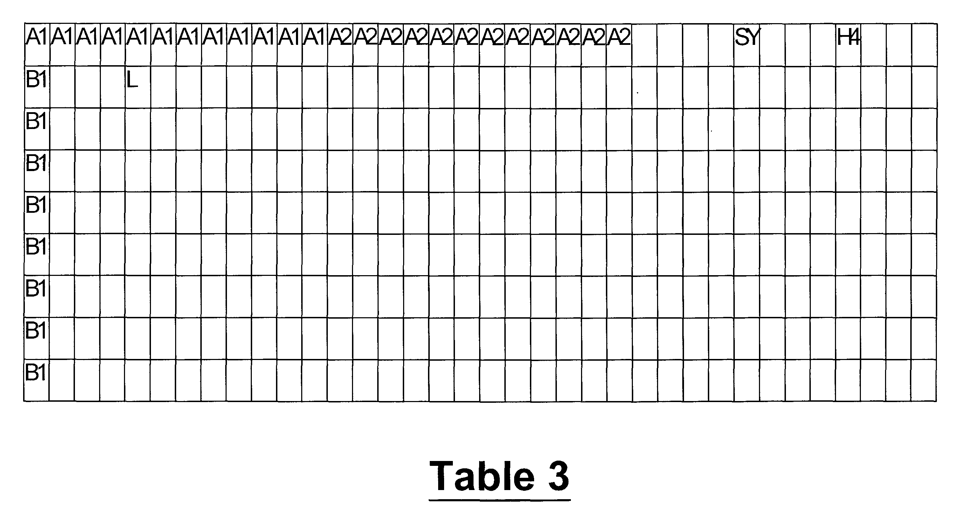

In Fig. 3 shows the board CB1 of the switch matrix CM.

Here, the frame TRM1 is received by a phase aligner DP, controlled by the reference clock signal CKR1. A serial-parallel converter device SP back converts the frame by removing its bit interleaving, while a rotator ROT2, controlled by a frame aligner AFW, performs the alignment based on the frame alignment words. The serial-parallel converter device SP is controlled by a divided clock signal CKD, which is obtained dividing the reference clock signal CKREF1 by eight through a special divisor DIV8. The divided clock signal also controls an appropriate write counter CNTW, which drives the writing phase in the elastic memory EMX. The frame TRM1, read by the elastic memory EMX through a read counter CNTR driven by the divided signal CKD, is then able to go to a core of the matrix MCO.

Vice-versa, the data TRU1 coming from the core of the matrix MCO are serialized through a parallel-serial converter device PS, driven by the divided signal CKD and sent to the peripheral board PD.

The structure of the above receiver which is arranged downstream the phase aligner DP may also be replicated for the receiver of the peripheral board PD illustrated in Fig. 2.

The frame formats TRM1 and TRM2 of the improved interfacing system for synchronous hierarchy telecommunication networks according to the present invention are now described as follows.

### Multiplex structure

Data frames TRM1 and TRM2 between the peripheral board PD and central boards CB1 or CB2 are obtained through a 'bitwise', or bit-by-bit, multiplexing operation of four frames STM-1. For instance, from the four STM1 frames reported in Table 1:

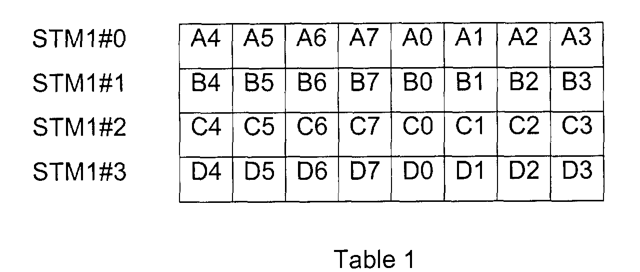

the following data frame TRM1 as reported in the following Table 2 is obtained through bitwise multiplexing of said four frames STM-1:

**Table 2**

| | | | | | | | | |
|---|---|---|---|---|---|---|---|---|
| A7 | B7 | C7 | D7 | A6 | B6 | C6 | D6 | ... |

Therefore, the basic elements of an output frame TRM1 from the peripheral board PD consist of frames STM-1; 4 AU-4 tributaries plus a few bytes SOH can be brought to each connection to perform device functions.

The bytes SOH are individual for each frame STM-1, whereas in the instance of frames STM-4 or STM-16, only the first frame STM-1 is mapped, whereas meaningless bytes will all be zero.

The data frame TRM1 has the following format, where some bytes are overwritten as described in Table 3.

In this frame TRM1, the bytes indicated in Table 3 have the following meanings:
· A1,A2 = 'F6'H,'28'H frame alignment words
· SY = synchronism byte, involving one second synchronism for managing the system alarms and performances; said byte, usually consisting entirely of zeros, will assume the value "00000001" once a second. It is supplied by the central boards CB1, CB2 and is interpreted by the peripheral boards PD, so shifting the calculation load on them. In the direction from the peripheral boards PD to the central boards CB1 and CB2 it is all zeros.
· H4 = multiframe synchronism counter. The contents of this byte is a binary counter from 0 to 15, which is supplied by the central boards CB1, CB2 and is interpreted by the peripheral boards PD.
· B1 = parity accumulation bit, calculated on the previous line; if the previous line does not carry a byte B1 (for instance, it is an AU pointer), the parity of two frames will be accumulated. The byte has a p p p p p p p p format, where p is the parity bit accumulated.
· L = connection monitoring byte.

### Mapping of frames TRM1 and TRM2 and "in band signalling"

The frames STM-1 inserted in the data frames TRM1 and TRM2 are controlled in transmission before bit interleaving and after bit de-interleaving in reception.

The following Table 4 is representing the mapping and "in band signalling", i.e. introduction of control bytes inside the frame of a STM-1 frame transmitted from the peripheral boards PD, without changing the band, so as to insert further different control bytes in the different layers:

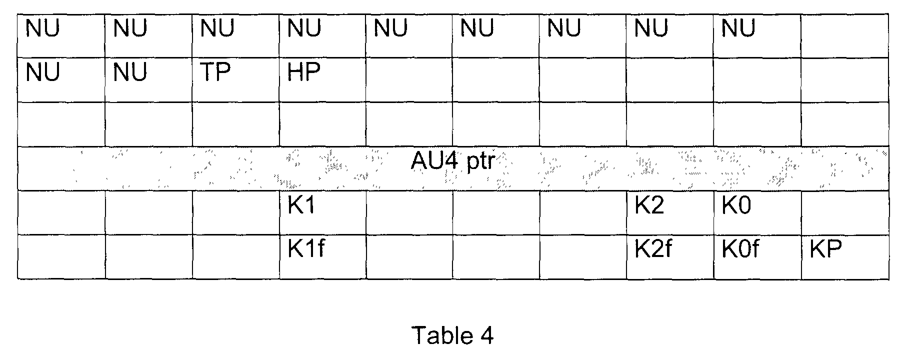

In the above Table 4:
- TP is a band alarm signalling bit for the MSP matrix, inserted in all conveyed STM-1 frames shaped as indicated in Table 5:

**Table 5**

| | | | | | | | |
|---|---|---|---|---|---|---|---|
| Tsf | Tsf | tsd | Tsd | tsf | Tsf | Tsd | Tsd |

· tsf = signal fail indication
· tsd = signal degrade indication

- APS protection bytes
· K1,K2 = K1 and K2 bytes as they come from the line.

They are inserted in each first STM-1 #1 of a STM-N flow. All other STM-1 bear 0 in such bytes. When a signal fail indication TSF is issued on the line receiver, there will be ones transmitted in their place.
K0: moreover it is provided to also handle byte K0, not provided by the standard, which is inserted in each first STM-1 #1 of a STM-N flow. All the other STM-1 carry 0 in such bytes.
· K1f, K2f, K0f = these bytes are filtered versions of the previous K0, K1, K2, from the line. They are inserted in each first STM-1 #1 of a STM-N flow. All other STM-1 carry 0 in such bytes. When a signal fail indication TSF is issued on the line receiver, their last valid value will be transmitted.
· KP = band alarm signalling byte for K bytes protocol.
It is inserted in each first STM-1 #1 of a STM-N flow. All other STM-1 carry 0 in such a byte, according to the form shown in Table 6:

**Table 6**

| | | |
|---|---|---|
| cng | Unc | All zeros |
| Cng = change indication for the set of filtered bytes K | | |
| Unc = inconsistency indication for the set of filtered bytes K | | |
| The HP byte is provided in relation to the transport of VC4 virtual container. This byte is apt for signalling band alarm for HPCP (Higher Path Capacity Protection) inserted in all AU4 transported and it takes the form of Table 7. | | |

**Table 7**

| | | | | | | | |
|---|---|---|---|---|---|---|---|
| Ptsf | Ptsf | Ptsd | Ptsd | Ttsf | Ttsf | Ttsd | Ttsd |

· Ptsf: signal fail indication on the path
· Ptsd = signal degrade indication on the path
· Ttsf: signal fail tandem indication
· Ttsd = signal degrade tandem indication

In the instance of transporting Tributary Units TU in VC4, introduction of a band alarm signalling byte LP for LPCP (Lower Path Capacity Protection) is provided for insertion instead of the last byte of the pointer column for TU3, or instead of the byte V4 in the case of TU2 or TU12. The format of byte LP is indicated in the following Table 8:

**Table 8**

| | | | | | | | |
|---|---|---|---|---|---|---|---|
| Ptsf | Ptsf | Ptsd | Ptsd | Ttsf | Ttsf | Ttsd | Ttsd |

· Ptsf: signal fail indication on the path
· Ptsd = signal degrade indication on the path
· Ttsf: signal fail tandem indication
· Ttsd = signal degrade tandem indication

### Protection protocol

1+1 protection is implemented for automatic operation on the peripheral boards interfaces. This is obtained using byte L.
Through the frames TRU1 and TRU2, each peripheral board PD receives some bytes L, whose format is indicated in Table 9:

**Table 9**

| | | |
|---|---|---|
| CF | AV | All zeros |
| CF is a status bit reporting information about the fail state of the source board, | | |
| CF=1 means a failure of the corresponding board. | | |
| AV is an availability bit giving information about the switching preference, so as to implement said switching. AV=1 means that connection is available, therefore a switch is forcedly operated between the board CB1 or CB2, which supports the traffic. | | |

In transmission, the peripheral boards PD place the bit CF to 1 should failures be detected in the board and the bit AV to 0. Upon reception, the peripheral boards PD select the board CB1 or CB2 according to a pre-selection, i.e. they perform selection based on the failures detected in the data received; if no failures are detected, they perform selection based on the bytes CF received; if all bytes CF are zero, then the peripheral boards PD will perform selection based on the bytes AV. Finally, when all bits AV are zero or one, no changes of the central board CB that is taken as the source will take place.

In transmission, the central boards CB, in their turn, place the bit CF to logic one should a failure of the board be detected and assign according to the pre-selection the value zero or one to the bit AV, which establishes which central board CB1 or CB2 is initially active. In transmission, the central boards CB will store the bytes L received.

The above selection operated by the peripheral boards PD of the board CB1 or CB2 is performed by means of the logic state machine MS represented in Figure 2, which receives the bytes L, L1 and L2 respectively, from their respective boards CB1 and CB2, generating the appropriate selection signal SEL.

Said logic state machine MS also receives alarm information AL, signalling possible clock signal interruptions of either board CB1 or CB2, or loss of frame alignment. In both cases the selection signal SEL is so set to transfer traffic to the operating central board CB.

Therefore, summarizing and clarifying, the hitless protection mechanism is implemented according to the present invention through the following steps:
- first, time information IT exchanged between the local clocks OL1 and OL2, as illustrated in Figure 1, contains the frequency of the clock signals CKR1 and CKR2, information about the frame alignment through the respective synchronism byte SY, information about the multiframe synchronism through the byte H4, as well as one second synchronism. As a result, the clock signals CKR1 and CKR2 are synchronized therebetween, save for the uncertainties of the PLL circuits interlocking them;
- The frames exchanged between the peripheral boards PD and central boards CB are further aligned by means of the memory block MSA and relevant offset counter OCNT, of the digital phase locking loop DPLL, which recovers possible phase errors between the clock signals, as well as of the use of shared read and write counters for the elastic memories.

Therefore, the above solutions allow for adopting relatively simple circuits on the peripheral boards PD for switching from a central board CB to the other, i.e. providing a simple selection signal SEL generated by a state machine MS driving standard multiplexers.

From the above description the features of the present invention, as well as its advantages will be clear.

The improved interface system for synchronous hierarchy telecommunication networks according to the present invention allows advantageously for reducing the number of connections, inasmuch as it introduces control bytes directly in the frames, such as synchronism or protection control bytes, so as to avoid dedicating connections to the control bytes alone. An additional contribution for reducing the complexity is obtained through the frames serialization or bit interleaving by means of the transmitters of both the peripheral boards and central boards. Moreover, serialization involves a smaller power request to the central boards, which should not demultiplex the input frames.

Additionally, the improved interface system for synchronous hierarchy telecommunication networks according to the present invention advantageously assigns the computational phase to the peripheral boards, reducing such a computational load and consumption on the chip of the switch matrix itself.

As a further advantage of the improved interface system for synchronous hierarchy telecommunication networks according to the present invention, no circuit for recovering the clock signal on the peripheral boards are required, thanks to the use of alignment words and simple frame aligners.

As a further advantage of the improved interface system for synchronous hierarchy telecommunication networks according to the present invention, the clocks are directly implemented on the boards of the switch matrixes.

As a further advantage of the improved interface system for synchronous hierarchy telecommunication networks according to the present invention, a 'hitless protection' mechanism is implemented through relatively simple circuits mainly located on the peripheral boards, thanks to local clocks interdependence and frame alignment control on the peripheral boards.

It is obvious that many other changes are possible for the man skilled in the art to the improved interface system for synchronous hierarchy telecommunication networks described by way of example, without leaving the novelty principles of the inventive idea, and it is clear that in practical actuation of the invention the components may often differ in form, size, proportions and materials employed from the ones described above by way of example, and be replaced with technical equivalent elements.

## Claims

1. Improved interface system for synchronous hierarchy telecommunication networks comprising a high frequency backpanel function, said system comprising at least a central board (CM, CB1, CB2) and one or more input/output peripheral boards (PD) apt to exchange data frames (TRM1, TRM2, TRU1, TRU2) and control bytes (A1, A2, SY, H4, L), **characterized in that** said data frames (TRM1, TRM2, TRU1, TRU2) contain said control bytes (A1, A2, SY, H4, L) and that said data frames (TRM1, TRM2, TRU1, TRU2) are bitwise converted before being exchanged between the peripheral boards (PD) and the central board (CM, CB1, CB2).

2. Interface system according to claim 1, **characterized in that** the central board (CM, CB1, CB2) comprises a local clock (OL1, OL2).

3. Interface system according to claim 2, **characterized in that** said control bytes (A1, A2, SY, H4, L) comprise bytes for frame alignment (A1, A2).

4. Interface system according to claim 2, **characterized in that** said control bytes (A1, A2, SY, H4, L) comprise synchronism bytes (SY, H4)

5. Interface system according to claim 2, **characterized in that** said control bytes (A1, A2, SY, H4, L) comprise bytes for monitoring the connection and switching of the active board (L).

6. Interface system according to claim 1, **characterized in that** it provides further signalling bytes (TP, HP, LP) inserted in the various layers of said frames (TRM1, TRM2) for implementing a mapping function of the frames (TRM1, TRM2) and in band signalling.

7. Interface system according to the previous claims, **characterized in that** the switch matrix (CM) comprises at least two central boards (CB1, CB2), whose local clocks (OL1, OL2) are made interdependent through the exchange of time information (IT).

8. Interface system according to claim 7, **characterized in that** said time information (IT) contains the frequency of clock signals (CKR1 ,CKR2) of the local clocks (OL1, OL2), information about frame alignment (SY), and information about multiframe synchronism (H4).

9. Interface system according to claim 7, **characterized in that** the peripheral boards (PD) comprise memory means (MSA, OCNT) for compensating jitter or wander effects on the frame alignment.

10. Interface system according to any claims 7 to 9, **characterized in that** said memory means (MS; OCNT) and said time information (IT) cooperate for implementing a hitless traffic protection.
